# EUROPEAN PATENT SPECIFICATION

(11) **EP 0 756 556 B1**
(45) Date of publication and mention of the grant of the patent: **15.09.1999**
(21) Application number: 95917356.8
(22) Date of filing: 21.04.1995
(51) Int. Cl.: B64C 25/36

(54) **AIRCRAFT LANDING-GEAR DRIVE SYSTEM**
ANTRIEBSSYSTEM FÜR DAS FAHRWERK EINES FLUGZEUGS
SYSTEME D'ENTRAINEMENT D'UN TRAIN D'ATTERRISSAGE D'AVION

(30) Priority: 22.04.1994 GB 9408075
(43) Date of publication of application: 05.02.1997
(73) Proprietor: GREENLITE LIMITED, St. Helier, Jersey JE2 3NG (GB)
(72) Inventor: GRITTI, Gianfranco, I-39100 Renon (IT); GIOVANARDI, Enrico, I-39100 Bolzano (IT); CENTOFANTE, Enzo, I-38015 Lavis (IT)
(74) Representative: Bailey, David Martin
(86) International application number: EP9501527
(87) International publication number: WO9529094

(56) References cited:
- FR-A- 1 368 754
- US-A- 3 034 748
- US-A- 3 059 712
- US-A- 3 762 670

## Description

The present invention relates to a system for driving the landing gear of an aircraft.

The power for all ground movement of an aircraft during taxiing is provided by the thrust generated by the main engines of the aircraft, be they turbine, turbofan or turboprop engines. The degree of thrust is controlled by the pilot adjusting the power of the engine.

A considerable volume of fuel is burnt by commercial aircraft alone in taxiing before and after flight. For example, a DC9 will burn around 150 US gallons (570 litres) of fuel and a Boeing 747 typically around 260 US gallons (980 litres). A typical main European airport may have an average of six hundred movements per day. Assuming taxiing fuel consumption is just 130 US gallons (500 litres), this equates to around 80,000 US gallons (300,000 litres) of Jet A1 aviation fuel per day. Over a full year this amounts to around 29 million US gallons (110 million litres).

When one considers that the European community alone has thirty five main airports, in excess of one billion US gallons (3.75 billion litres) of fuel are burnt each year solely for taxi movements around airports. In burning these large amounts of fuel, not only is a great deal of money and natural resources wasted, but the aircraft produce correspondingly great amounts of exhaust gases which contribute to the high degree of air pollution associated with airports.

Accordingly, there is a need to provide an alternative method of manoeuvring aircraft on the ground at airports.

US 3 762 670, which is considered to constitute the closest prior art, describes an aircraft having driving means associated with at least one of the wheels of the landing gear.

The arrangement described includes a lightweight auxiliary drive mechanism carried by an aircraft for applying driving torque to wheels of a landing gear of the aircraft for taxiing the aircraft along the ground. In particular, the mechanism consists of a driving drum arranged for friction driving engagement with the tyre of a wheel of a landing gear having a telescopic, shock-absorbing strut, and an auxiliary motor drivably connected to the drum, with the drum being supported on said landing gear.

US 3 059 712 describes an alternative aircraft wheel powering device including a boom terminated in a housing and operative to receive the twisting forces exerted thereon; a fluid motor supported on the housing and a member fixed for rotation about a generally horizontal axis with respect to the housing. Gear means drivingly connect the motor to the rotatable member. A coaxial annular surface extends from the rotatable member; and an annular inflatable tube is disposed on the outer diameter of the annular surface. Fluid pressure means are provided for inflating the tube so as to bring its outer surface into pressured contact with said wheel rim and to move said housing so as to bring the axis of rotation of the member into substantial alignment with the axis of rotation of the wheel, whereby the device is substantially supported by the wheel rim.

According to the present invention there is provided a nose gear of an aircraft, the nose gear having an assembly for driving the wheels of a twin-wheeled nose gear of an aircraft, the assembly comprising a motor in operative connection with a differential gear assembly, each wheel being mounted on an axle in operative connection with a respective half-shaft of the differential gear through a free wheel mechanism.

The present invention also provides nose gear of an aircraft, the nose gear having an assembly for driving the wheel of a nose-gear of an aircraft, the assembly comprising a motor driving a bevel pinion acting upon a crown wheel or endless screw to cause rotation of an axle upon which the wheel is mounted.

Typically such an assembly further comprises a free wheel mechanism.

Typically, power is delivered from the auxiliary power unit by the wheels via an electric or hydraulic motor associated with each driven wheel.

The above and other aspects of the present invention will now be illustrated in greater detail, by way of example only, with reference to the accompanying drawings in which:

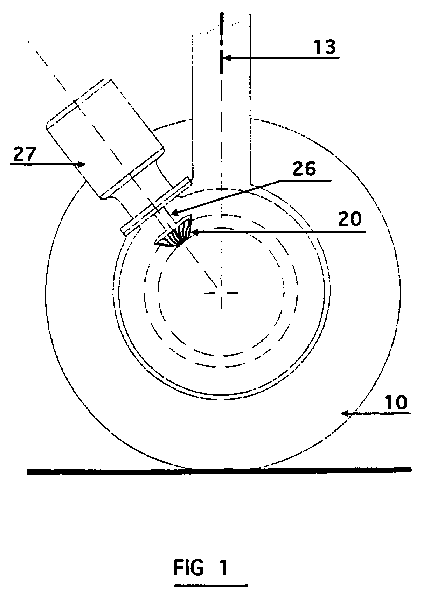

Figure 1 shows in cross section the front carriage wheels of an aircraft in accordance with a first embodiment of the present invention; and

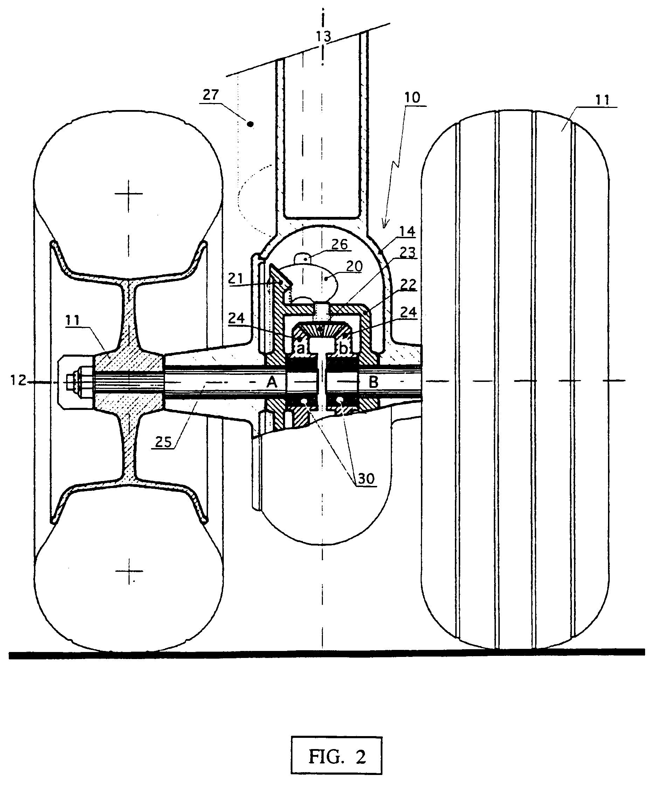

Figure 2 shows in axial cross section the embodiment of Figure 1.

Referring to the Figures, a front carriage (shown generally at 10) of an aircraft is provided with two wheels 11 rotatable about an axis 12. The whole carriage 10 is rotatable about a further axis 13 perpendicular to axis 12, to steer the aircraft.

In a cavity 14 of the front carriage 10 there is mounted a differential gear comprising a bevel pinion 20 driving a crown wheel 21 mounted on a housing 22 carrying differential pinions 23 driving bevel gear 24 mounted on half shafts 25. Each carriage wheel 11 is mounted at the end of one of the half shafts. The bevel pinion 20 of the differential gear is driven by a propeller shaft 26 of a motor 27.

Motor 27 may be supplied with fluid from a hydraulic pump powered by the auxiliary power unit of the aircraft. Alternatively, motor 27 may be electrically powered, taking its supply from the auxiliary power unit (APU) in a conventional manner. Commercial aircraft are provided with an (APU) which is used to provide power for the aircraft services, for example lighting and control circuits, whilst the aircraft is on the ground without requiring powering up of the main engines. As an APU is typically run at a flat rate, that is, the power output is not variable, ample surplus power is available from the APU to provide the necessary energy to drive motor 27 (typically 200-300 HP is available) - it is to be noted that the apparatus of the present invention does not result in any increase in fuel consumption by the aircraft. The generation of hydraulic and electrical supplies from aircraft APUs is well known in the art. In most aircraft, suitable hydraulic pumps and electrical generators are already present. Some aircraft may, however, require such apparatus to be upgraded.

Conventionally, the front carriage wheels are not braked and so there is no braking gear in the front carriage 10 with which the installation of different gear apparatus might otherwise interfere. Nor will the additional apparatus interfere with the raising or lowering of the landing gear.

As shown, in a preferred embodiment, each bevel gear 24 is coupled to its respective half shaft through a free wheel mechanism 30 of otherwise conventional construction. The free wheel mechanism if of particular use when the aircraft is coming in to land. The free wheel arrangement will allow the wheel 11 to spin faster than the differential gear would otherwise allow, this being of benefit if the pilot has forgotten to disengage the carriage wheel drive mechanism prior to take off. Due to the presence of the free wheel arrangement, the apparatus allows only forward movement of the aircraft. However, rearward movement is possible by rotating the carriage 10 by 180° or by mechanically locking the free wheels and reversing the direction of rotation of the motor 27. Thus forward movability of the aircraft is obtained independent of the need of towing bars and/or tractors.

In aircraft having a single wheel nose gear arrangement, the differential gear box can be omitted. Typically in such an arrangement, motor 27, through a bevel pinion 20, drives a crown wheel 21 or endless screw connected directly (or preferably through a free wheel arrangement) to the axle of the wheel.

The conventional hydraulic steering of the front carriage is unaffected by installation of the driving gear described, nor will there be an affect or change in the hydraulic braking system on the main gear of the plane. Preferably, a braking action performed by the pilot will deactivate the front carriage wheel driving mechanism automatically, in the event that the pilot has inadvertently forgotten to disengage the mechanism.

The pilot in the cockpit will be able to engage and disengage the front carriage wheel driving apparatus by means of a switch in the electrical power supply or by a switch actuating an electro-hydraulic valve, as appropriate by the nature of the motor 27 used. The power supplied to motor 27 will be variable under the control of the pilot to increase or decrease the speed of the taxiing aircraft. Conventional electrical and hydraulic control mechanisms are suitable for this purpose.

If an aircraft is not provided with an auxiliary power unit, power to drive the motor 27 can be obtained from running a single main engine at its minimum speed. Nevertheless a huge saving in the amount fuel required and the resultant air pollution would still be obtained. For accurate hanger manoeuvres, where the auxiliary power unit may not be in operation, an independent power source may be used, for example an external trolley fitted with batteries for an electrically powered mechanism or with an additional hydraulic pump for an electro-hydraulic motor.

Even during landing the wheel driving mechanisms of the present invention do not obstruct the free run of the wheels. The presence of a differential gear box in the nose gear makes possible the movement of the carriage at any desired steering radius even on a steady spot rotation. In this case, the nose gear carriage would rotate with one of the two wheels acting as a pivot.

## Claims

1. A twin-wheeled nose gear (10) of an aircraft, the nose gear having an assembly for driving the wheels (11) of a win-wheeled nose gear (10) of an aircraft, the assembly comprising a motor (27) in operative connection with a differential gear assembly, each wheel (11) being mounted on an axle in operative connection with a respective half-shaft (25) of the differential gear through a free wheel mechanism (30).

2. A nose-gear (10) of an aircraft, the nose gear having an assembly for driving the wheel (11) of the nose-gear (10), the assembly comprising a motor (27) driving a bevel pinion (20) acting upon a crown wheel (21) or endless screw to cause rotation of an axle upon which the wheel (11) is mounted.

3. A nose-gear as claimed in Claim 2 wherein the assembly further comprises a free wheel mechanism.

4. A nose-gear as claimed in any one of Claims 1 to 3 wherein the motor is an electric or hydraulic motor.

5. A nose-gear as claimed in any one of Claims 1 to 4, wherein the power to drive each wheel is derived from the auxiliary power unit of the aircraft.

6. An aircraft comprising a nose gear (10) having an assembly as claimed in any one of Claims 1 to 5.

## Patentansprüche

1. Zweirädriges Bugfahrwerk (10) eines Flugzeugs, wobei das Bugfahrwerk eine Anordnung zum Antrieb der Räder (11) eines zweirädrigen Bugfahrwerks (10) eines Flugzeugs aufweist, wobei die Anordnung einen Motor (27) in betriebsmäßiger Verbindung mit einer Differentialgetriebeanordnung aufweist, wobei jedes Rad (11) an einer Achse in betriebsmäßiger Verbindung mit einer jeweiligen Halbwelle (25) des Differentialgetriebes durch einen Freilaufmechanismus (30) angebracht ist.

2. Bugfahrwerk (10) eines Flugzeugs, wobei das Bugfahrwerk eine Anordnung zum Antrieb des Rads (11) des Bugfahrwerks (10) aufweist, wobei die Anordnung einen Motor (27) aufweist, der ein auf ein Antriebskegelrad (21) oder eine Schnecke wirkendes Kegelritzel (20) antreibt, um eine Achse, auf der das Rad (11) angebracht ist, in Drehung zu versetzen.

3. Bugfahrwerk nach Anspruch 2, wobei die Anordnung ferner einen Freilaufmechanismus aufweist.

4. Bugfahrwerk nach einem der Ansprüche 1 - 3, wobei der Motor ein elektrischer oder hydraulischer Motor ist.

5. Bugfahrwerk nach einem der Ansprüche 1 - 4, wobei die Energie zum Antrieb jedes Rads von einer Hilfsenergieeinheit des Flugzeugs bezogen wird.

6. Flugzeug, umfassend ein Bugfahrwerk (10) mit einer Anordnung nach einem der Ansprüche 1 - 5.

## Revendications

1. Train avant d'aéronef à diabolo (10), ce train avant possédant un assemblage pour commander ses roues (11), cet assemblage comprenant un moteur (27) connecté en état de fonctionnement à un assemblage d'engrenage différentiel, chaque roue (11) étant montée sur un axe présentant une connexion en état de fonctionnement avec le demi-arbre respectif (25) de l'engrenage différentiel par un mécanisme de roue libre (30).

2. Train avant (10) d'un aéronef, ce train avant possédant un assemblage pour commander sa roue (11), cet assemblage comprenant un moteur (27) commandant un pignon conique (20) agissant sur une couronne d'entraînement (21) ou une vis sans fin pour faire tourner un axe sur lequel cette roue (11) est montée.

3. Train avant selon la revendication 2, dans lequel l'assemblage comprend en outre un mécanisme de roue libre.

4. Train avant selon l'une quelconque des revendications 1 à 3, dans lequel le moteur est un moteur électrique ou hydraulique.

5. Train avant selon l'une quelconque des revendications 1 à 4, dans lequel l'énergie entraînant chaque roue provient d'une alimentation auxiliaire de l'aéronef.

6. Aéronef comprenant un train avant (10) possédant un assemblage selon l'une quelconque des revendications 1 à 5.
